# EUROPEAN PATENT APPLICATION

(11) **EP 1 013 570 A2**
(43) Date of publication of application: **28.06.2000**
(21) Application number: 99123291.9
(22) Date of filing: 30.11.1999
(51) Int. Cl.: B65G 21/10

(54) **System and corresponding method for replacement of the continuous conveyor belt of a belt conveyor**

(30) Priority: 22.12.1998 IT BO980705
(71) Applicant: BAUMER S.r.l., 41013 Castelfranco Emilia (IT)
(72) Inventor: Gambetti, Mario, 40014 Crevalcore (Bologna) (IT)
(74) Representative: Gustorf, Gerhard, Dipl.-Ing.

(57) **Abstract**

-The invention relates to a system and a method for replacement of a continuous belt of a conveyor, in which a conveyor unit (2) has a first transverse end side (2a), which is secured to/built into the first upright (1a), and an opposite or second transverse end side (2b), which is secured in a detachable manner to the second upright (1b), and engagement/release tension means (36; 38) which can tighten or loosen the continuous belt (3), in which the second transverse end side (2b) is disposed disconnected and detached from the second upright (1b) in the vicinity of an aperture (22-23) provided in the second upright (1b), in order to extract the belt transversely through the said aperture (22-23).

## Description

### Field of the invention

-The present invention relates to a system and a corresponding method for replacement of a continuous conveyor belt, i.e. an endless belt, which is wound around a closed path of a belt conveyor, in particular in the field of automatic packaging machines, in which the said machines have two parallel lateral uprights, which extend longitudinally and vertically, and are spaced transversely, between which there are disposed and supported one or more of the said conveyors, and wherein, in their closed path, the said conveyor belts comprise at the top a transport plane which slides on a support plate, and at the base they are wound around return and/or tension and/or guide rollers which are oriented transversely, and are designed to return and/or tighten and/or guide the said continuous belt.

### Background of the invention

-At present, see for example patents US-5,203,144, US-5,203,146 and 5,463,846 in the name of the same applicant as for the present patent application, in the said packaging machines, the opposite ends of the shafts and/or of the axles of the rollers of the continuous belt conveyors are supported by the longitudinal uprights of the machine, and, in order to replace the continuous conveyor belts of the said conveyors as a result of accidental breakage, or for reasons of maintenance-wear of the belts themselves, many laborious operations are required, including substantially, for each conveyor, removal of the tension rollers, of the return rollers and of the guide roller; removal of the support plate; removal of the belt to be changed; replacement of the latter by a new belt; re-positioning of the return rollers, of the tension rollers, of the guide roller and of the support plate; regulation of the said tension rollers in order to tighten the new conveyor belt satisfactorily; and also, in some cases, re-establishment of the timing of the said conveyor relative to the various kinematic mechanisms for synchronisation of the packaging machine, since, when the guide roller is removed, the preceding timing is lost.

-These systems and the corresponding methods have a series of disadvantages which are caused mainly by prolonged stoppage of the packaging machine, with consequent toss of production, by the need to request the use of mechanical tooling from outside the machine, in order to remove and re-position the various components which constitute the conveyor (the weight of the rollers is considerable), and the need to have to use highly specialised and competent workers.

### Objects of the invention

-The object of the present invention is to eliminate the above-described disadvantages.

### Summary of the invention

The invention, which is characterised by the claims, solves the problem of creating a system for replacement of the conveyor belt of a belt conveyor, as well as that of creating a corresponding operative method.

-More particularly, the object of the present invention is a system for replacement of a continuous conveyor belt of a belt conveyor, in a packaging machine which comprises a first and a second support upright, which extend longitudinally and vertically, and are spaced transversely, between which there is disposed the said belt conveyor, which is oriented longitudinally, and includes a continuous belt which is wound around a closed path, with an upper section which is designed to form a transport section, and a lower section which is wound around tension rollers and around a guide roller which are oriented transversely, in which the said system is characterised in that the said conveyor unit has a first transverse end side which is secured to/built into the said first upright, and an opposite or second transverse end side, which is secured in a detachable manner to the said second upright; in that the said conveyor unit has engagement/release tension means, which can tighten or loosen the continuous belt; in that the first transverse end side is secured to/built into the upright, such that the said conveyor unit can be disposed in a first position for transport of objects, and in a second position for replacement of the belt, wherein, in this latter position, the second transverse end side is disconnected and detached from the second upright, and is suspended freely; and in that the second upright has an aperture which is disposed in the vicinity of the said second transverse end side, and has a size such as to allow an operator to access the said second transverse end side from the exterior, and to extract or insert the belt transversely, when the conveyor unit is in the aforementioned second position for replacement of the belt.

-In addition, the object of the present invention is also a method for replacement of a continuous conveyor belt of a belt conveyor, in a packaging machine which comprises a first and a second support upright which extend longitudinally and vertically, and are spaced transversely, between which there is disposed the said belt conveyor, which is oriented longitudinally, and includes a continuous belt which is wound in a closed path, which has an upper section designed to form a section for transport of objects, and a lower section which is wound around tension rollers and around a guide roller which are oriented transversely, wherein the said method is characterised in that the said conveyor is disposed in a position for replacement of the belt, in which a first transverse end side is secured to/built into the first upright, and the opposite or second, end side is detached from the opposite or second upright, and is suspended freely in the vicinity of an aperture provided in the second upright itself; in that the continuous belt is loosened by adjusting engagement/release tension means, by moving the tension rollers into a non-tightening position; in that the continuous conveyor belt to be replaced is extracted transversely towards the exterior, by operating and making the belt pass through the said aperture provided in the said second upright; in that a new conveyor belt is inserted transversely, by operating and making the belt pass through the said aperture provided in the said second upright; in that the new continuous belt is tightened by adjusting the engagement/release tension means, by moving the tension rollers into a tightening position; and in that the second end side of the conveyor is secured to the second upright, and the conveyor is disposed in a position for transport of objects.

-The results obtained by means of the present invention consist substantially in the fact that replacement of the continuous conveyor belt of a continuous belt conveyor which is mounted in the aforementioned packaging machines does not require removal of all of the various components which constitute the said conveyor, and, more particularly, it is not necessary to remove all of the return rollers, the tension rollers, the guide roller and the support plate, and consequently, when the belt has been replaced, it is not necessary to re-position the return rollers, the tension rollers, the guide roller and the support plate; and additionally, when the continuous conveyor belt has been replaced, it is not necessary to carry out new timing of the said conveyor relative to the various kinematic mechanisms for synchronisation of the packaging machine.

-The advantages obtained by means of the present invention consist substantially in that it reduces the work times for replacement of the continuous conveyor belt, with consequent reduction of the operative costs, and a lower loss of production caused by machine stoppages; in that the said solution is put into effect by means of quick and simple operations; and in that it is not necessary to use highly specialised workers.

### Brief Description of the Drawings

-Further characteristics and advantages of the present invention will become more apparent from the following detailed description of a preferred practical embodiment, provided purely by way of non-limiting example, with reference to the figures of the attached drawings, in which:
-Figure 1 is a schematic perspective view illustrating a packaging machine which is provided with the system which is the subject of the present invention;
-Figure 2 is a schematic plan view of the system which is the subject of the present invention, with some parts removed in order better to show others;
-Figure 3 is a view from the left-hand side, i.e. the so-called side opposite the operator, of the machine in figure 1, with some parts removed in order better to show others;
-Figure 3A is a view in cross-section along the line 3A-3A in figure 2, with some parts removed in order better to show others;
-Figure 4 is a view from the right-hand side, i.e. the so-called operator side, of the machine in figure 1, with some parts removed in order better to show others;
-Figure 4A is a view in cross-section along the line 4A-4A in figure 4;
-Figure 5 is a view similar to that in figure 4, after execution of first operations for replacement of the belt;
-Figure 5A is a view in cross-section along the line 5A-5A in figure 5;
-Figure 6 is a view similar to that in figure 5, after execution of further operations for replacement of the belt;
-Figure 6A is a plan view of figure 6;
-Figure 6B is a view in cross-section along the line 6B-6B in figure 6;
-Figures 7 and 7A are schematic views, with some parts removed in order better to show others, illustrating removal of the belt; and
-Figure 8 is a view similar to figure 6B, in which optional devices have been added.

### Description of the Preferred Embodiment

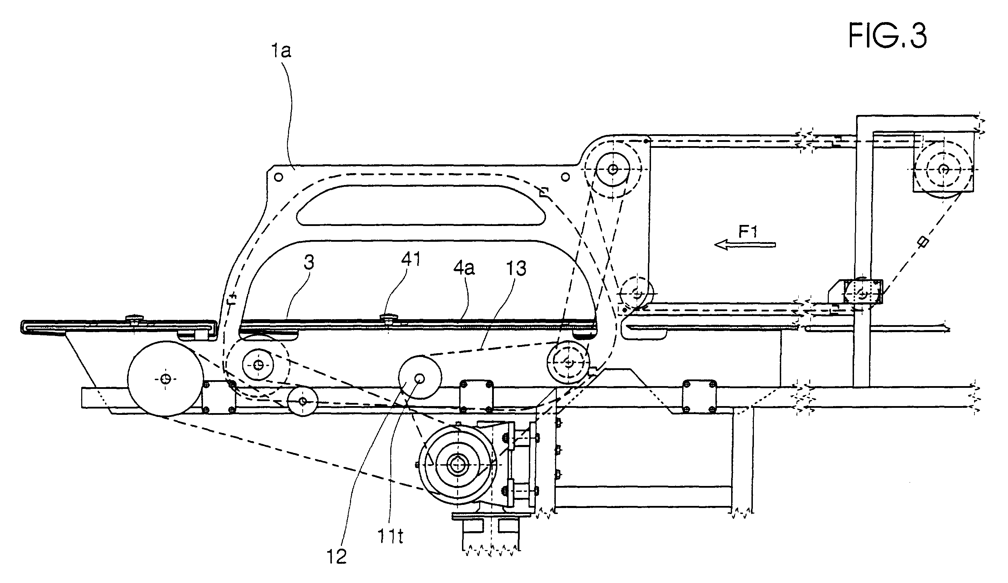

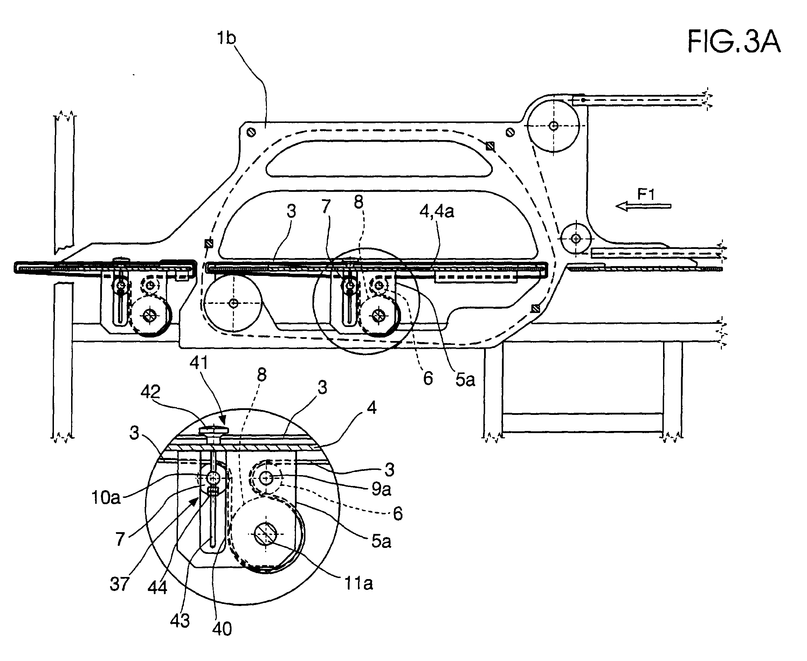

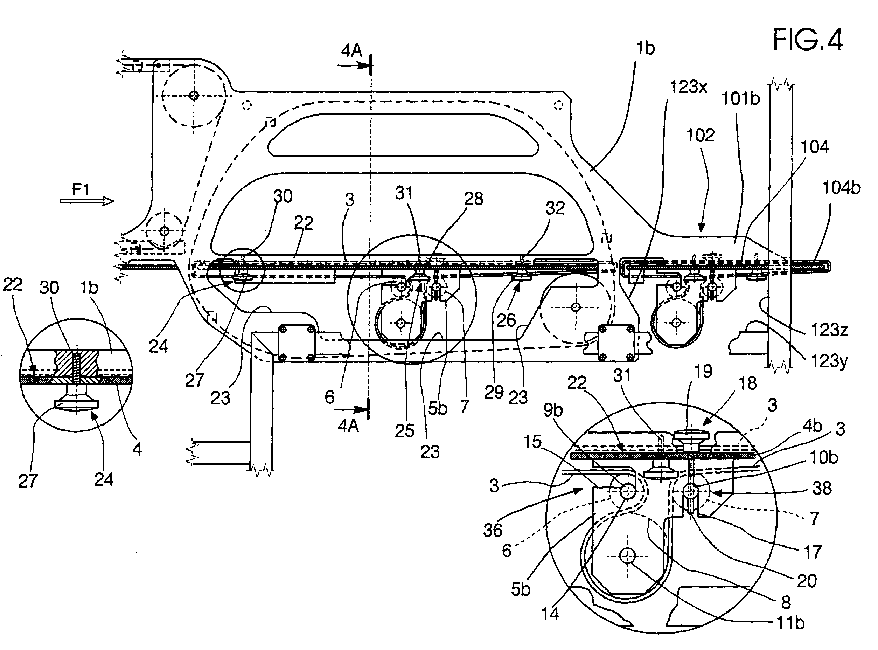

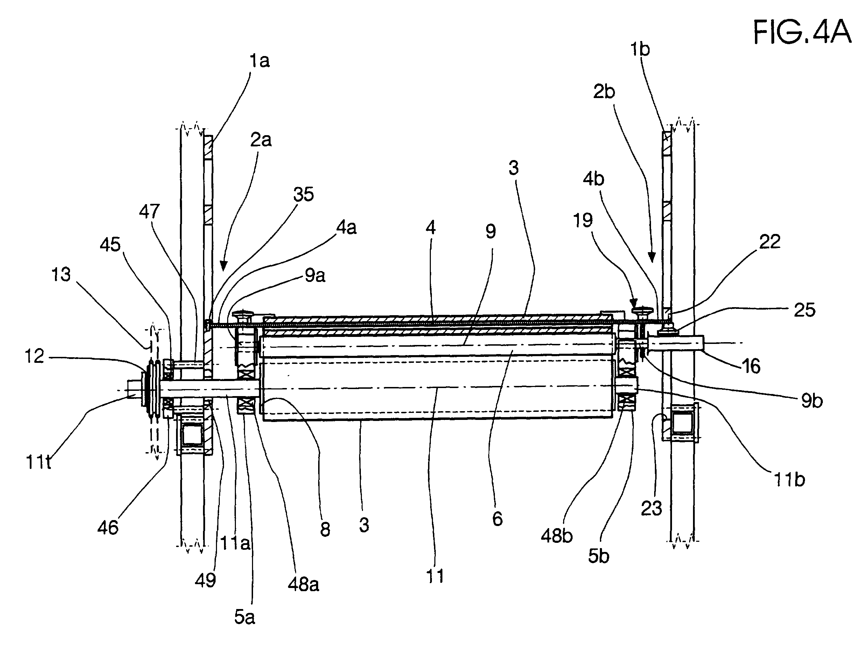

-In the description provided hereinafter, some numerical references are followed by the letters "a" (figures 3, 3A) or "b" (figure 4), in order to indicate details which are substantially the same, and are disposed respectively to the left or to the right of the packaging machine, with reference to an observer who has his back turned upstream from the machine itself.

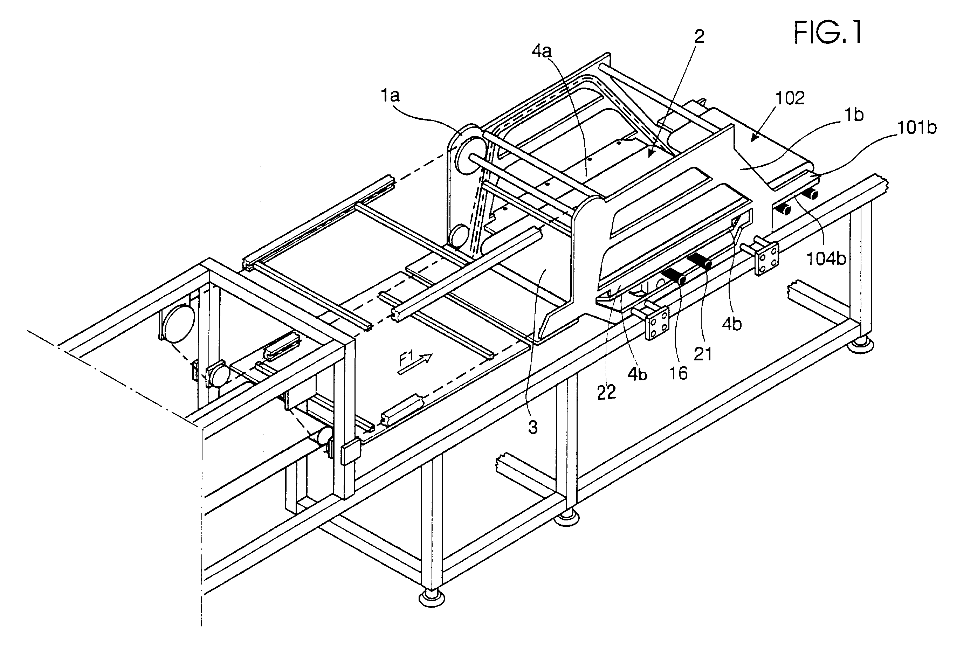

-With reference to figure 1, a packaging machine substantially comprises two lateral walls, indicated as 1a and 1b, in which the upright 1a forms the so-called side opposite the operator, and the upright 1b forms the so-called operator side.

-Between these sides 1a and 1b, there are disposed two belt conveyor units indicated as 2 and 102, which are described in greater detail hereinafter, are disposed in series one after the other, and are designed to transport according to the arrow F1 the objects which will be disposed on their upper section.

-The following description relates in particular to the conveyor unit 2, but it is understood that the same considerations can also be applied, and can relate to the conveyor 102, as described in greater detail hereinafter.

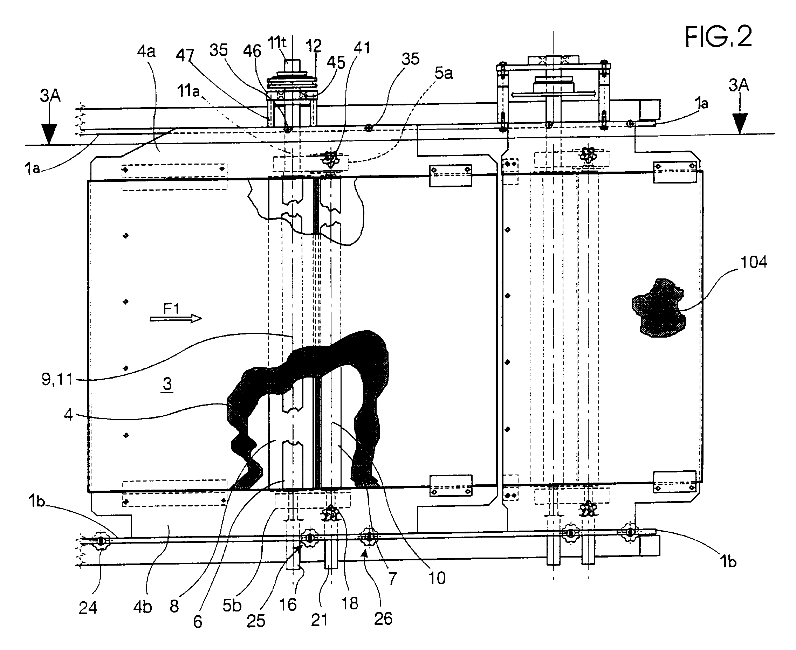

-With reference also to figures 2 3 3A 4 and 4A, see in particular fig. 4A, the conveyor unit indicated as 2, which is illustrated here in a first position, i.e. a position for transport of objects, is provided with a support structure, consisting of a sliding plate 4 and two pendent supports 5a and 5b, and substantially has two opposite transverse end sides, indicated as 2a and 2b, in which the first transverse end side, indicated as 2a, is secured to/built into the first upright 1a, and the second transverse end side, indicated as 2b, is secured in a detachable manner to the second upright 1b, as described in greater detail hereinafter.

-Between the said two transverse end sides 2a and 2b, there slides longitudinally in a closed path a continuous belt 3, the upper section of which is supported in a sliding manner on the upper surface of the sliding plate 4, thus defining a straight upper transport section which forms the plane for transport of objects.

-With reference to the said support structure 4-5a-5b, see figg. 3A 4 4A, the plate 4 extends transversely and longitudinally, and to the lower surface of the said plate 4 are secured the first pendent support 5a and the second pendent support 5b, which are spaced transversely, and are disposed on opposite sides of three rollers indicated as 6, 7 and 8, in order to support, as described in greater detail hereinafter, the opposite ends 9a-9b of a first shaft 9, on which there rotates in an idle manner the first tension roller 6 which is disposed upstream, the opposite ends 10a-10b of a second shaft 10, on which there rotates in an idle manner the second tension roller 7 which is disposed downstream, and finally, the portinon 11a and the end 11b of a shaft 11, which is aligned vertically with the shaft 9, onto which the guide roller 8 is keyed.

-In the lower section of its closed path, the said belt 3 has its outer surface wound around two tension rollers 6 and 7, which are disposed at a first level, and has its inner surface wound around the guide roller 8, which is disposed at a lower level, thus defining for the said lower section of belt 3 a configuration in the shape of an inverted "Ω".

-The shaft 9 has the first end, indicated as 9a, see in particular figg. 3A-4A, which is supported in a orientable manner, e.g. by a spherical centre bearing, such that said shaft 9 can be oriented but cannot slide axially from the first pendent support 5a. -The second end portion of said shaft 9, indicated as 9b, see in particular figg. 4-4A, is supported by the second pendent support 5b by means of first engagement/release tension means, indicated as 36 as a whole, in which, more particularly, the said end portion 9b is embedded in a circular chamber 14, which is provided in the pendent support 5b itself, which has a horizontal access slot 15, in order to permit sliding and positioning of the said end portion 9b of the shaft 9, into and out of the said circular chamber 14. -A grasping knob 16 is disposed at the final end of the said second end portion 9b, see fig. 2, 4A and 1.

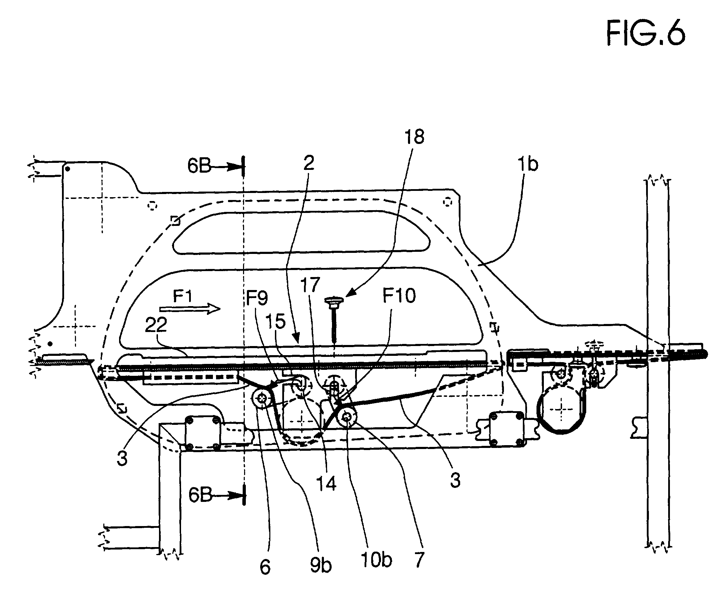

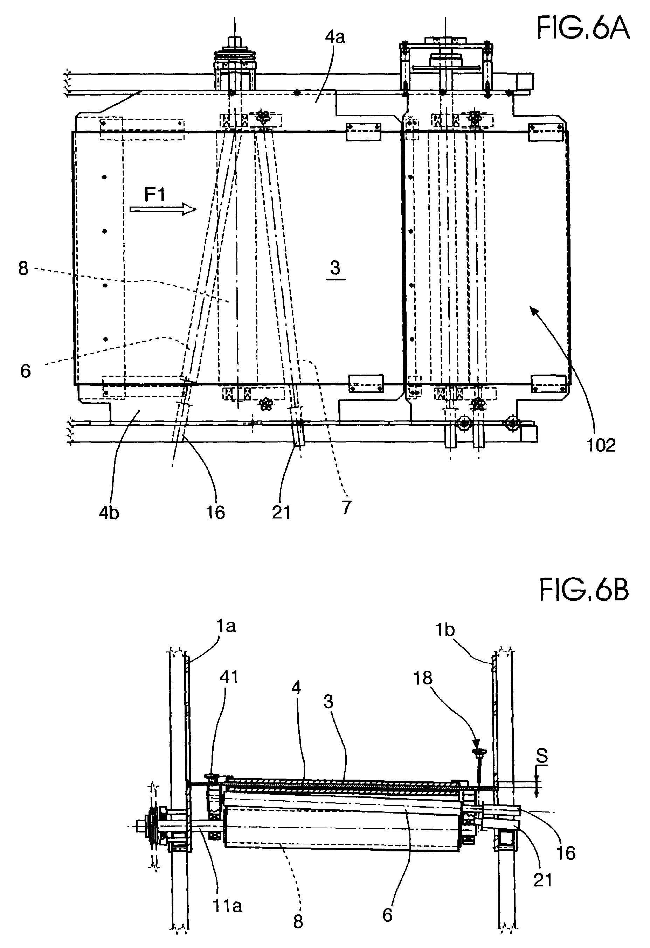

-By means of the above-described structuring, for the reasons which will become apparent hereinafter, the tension roller 6 can be disposed in at least two functional positions, i.e. a first position, which is designed to tighten the belt 3, in which the end portion 9a of the shaft 9 is embedded in the circular chamber 14, and is also kept in position as a result of the radial force which is directed downwards, which is applied to the said shaft-roller 9-6, and is generated by the tightening of the belt 3, see figures 2 and 4A; and at least one second, alternative position, which is designed to loosen the belt 3, in which the end portion 9b is disposed outside the said circular chamber 14, and outside the slot 15, in order to move the roller 6 away from the outer surface of the belt 3, see figures 6 6A and 6B.

-With reference to the figg. 3A and 4A, the shaft 10 has the first end portion indicated as 10a which is supported in a manner which can be oriented, by the support 5a, which is also disposed such as to slide in a vertical slot 40 provided in the pendent support 5a itself, and is kept in a vertical position by means of a screw 41, which on top has a head 42 which abuts the upper surface of the plate 4, and beneath has a threaded shank 43, which passes through the said plate, and into a radial hole which is provided on the said end portion 10a, onto which there is screwed a pair of nuts 44, in order to form tension adjustment means, which are indicated as 37 as a whole, and are designed to adjust and secure the vertical position of the said end portion 10a inside the said slot 40, for the reasons described hereinafter.

-With reference to figg. 4 and 4A, the said shaft 10 also has the opposite, or second end portion, indicated as 10b, which is supported by second engagement/release tension means, indicated as 38 as a whole, in which, more particularly, the said end portion 10b is disposed in a vertical slot 17 which is open at the base, provided in the pendent support 5b, and is kept in position there by means of a screw 18, which has a head 19 disposed against the upper surface of the plate 4, and a shank 20 which passes through the said plate 4, and is screwed through a threaded radial hole provided in the said second end portion 10b. -A grasping knob 21 is disposed at the end of the said end portion 10b, see fig. 2 and 1.

-By means of this structuring, it is possible to place the roller 7 in at least two functional positions, i.e. a first position, which is designed to tighten the belt 3, in which the end portion 10b of the shaft 10 is disposed inside the slot 17, and is kept in position vertically by the screw 18, see figures 2-4; and a second, alternative position, which is designed to loosen the belt 3, in which end portion 10b is disposed outside the said slot 17, see figures 6-6A.

-With reference to figg. 2 and 4, the shaft 11 has the end portion 11a which extends transversely inside and outside the upright 1a, by passing through a hole 49, in which the said end portion 11a is supported by means of two different support points, and more particularly, by a first, outer support point, formed by a first bearing 45, which is embedded in a support 46, which is rendered integral with the upright 1a by means of a plurality of cylindrical blocks 47; and, see fig. 4A, by a second support point, formed by a bearing 48a, which is embedded in the pendent support 5a.

-Onto the free end 11t of the said end portion 11a, there is keyed a toothed wheel 12, which is connected by means of a chain 13 to the system, not described or illustrated here, for driving and synchronisation of the packaging machine.

-With reference to fig. 4A, the second, opposite end portion of the said shaft 11, indicated as 11b, is supported by means of a bearing 48b, embedded in the pendent support 5b.

-The plate 4 has a transverse size greater than that of the belt 3, and, see figures 2 and 4A, has a central portion on which the belt 3 slides, and two opposite, end transverse portions, indicated as 4a and 4b, in which the first end transverse portion 4a is supported on the lateral upright 1a, and is secured to the latter by means of a plurality of screws 35, whereas the opposite, or second end transverse portion 4b, is secured in a manner which is detachable from the base upwards, against an edge stop 22 (see also fig. 1) provided from the top downwards of the upright 1b, by means of three screws 24, 25 and 26, see fig. 4, such that the respective heads 27, 28 and 29 of the latter are disposed against the lower surface of the plate 4, and the respective shanks 30, 31 and 32 are screwed into vertical threaded holes provided in the said upper edge 22 of the upright 1b.

-In the area beneath the said edge 22, the upright 1b itself has a notched profile 23, which, together with the said edge 22, substantially forms an aperture 22-23, which circumscribes and/or extends in the vicinity of the end side 2b of the conveyor unit 2.

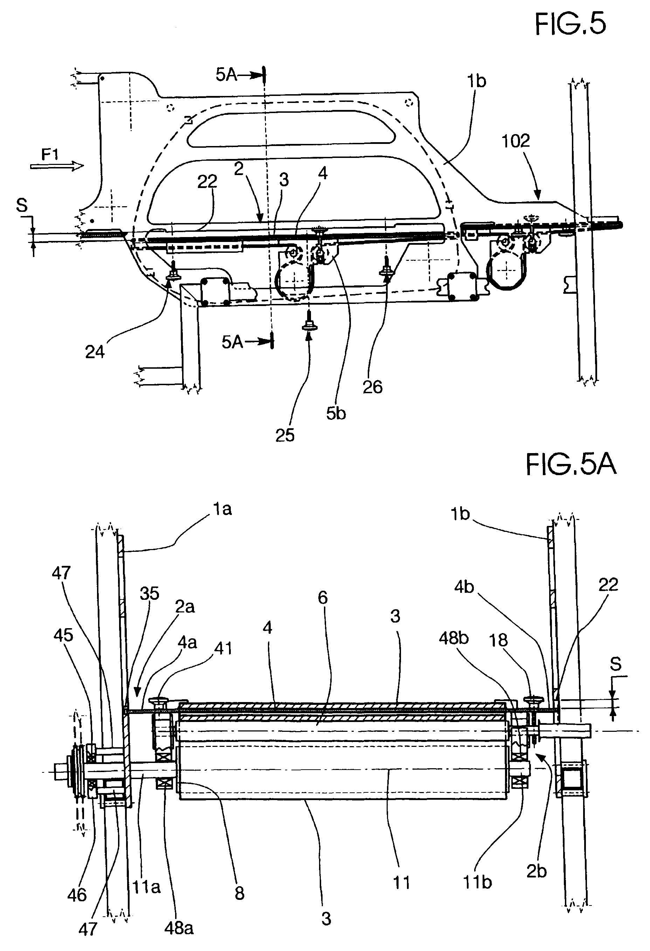

-Substantially, by means of this structuring, for the reasons which will become apparent hereinafter, it is possible to dispose the conveyor unit 2 in two separate positions, i.e. a first position, or a position for transport of objects, illustrated in figures 1, 2, 3 and 4A, in which the said conveyor unit 2 has its two transverse end sides 2a and 2b secured to the respective uprights 1a and 1b; and a second position, or position for replacement of the belt, illustrated in figures 5, 5A, 6, 6A, 6B, 7 and 7A, in which the conveyor unit 2 has its end side 2a still secured/embedded in the upright 1a, and the opposite or second transverse end side 2b, released and detached from the upright 1b, slightly lowered, free and suspended, as described in greater detail hereinafter.

-With reference to the said structuring, in order to replace the continuous belt 3, after the machine has been stopped, see figures 5 and 5A, the three screws 24, 25, and 26 which secure the end transverse portion 4b of the plate 4 to the edge 22 of the upright 1b, are removed.

-After this operation has been carried out, as a result of gravity, the transverse end side 2b of the conveyor 2 moves downwards, see figure 5A, thus giving rise to detachment and to a gap "S" between the edge 22 and the top of the plate 4b, and making the conveyor unit 2 assume its aforementioned second position for replacement of the belt, in which the end side 2b of the conveyor unit 2 is detached, lowered, free and suspended.

-More particularly, the said second position for replacement of the belt assumed by the conveyor unit 2 is obtained by means of the specific securing/embedding of the end side 2a in the upright 1a, in which the end transverse portion 4a of the plate 4 is secured to the upright 1a by means of the screws 35, whereas, lower down, the shaft 11 of the guide roller 8 has its end portion 11 a supported by the bearing 48a which is embedded in the pendent support 5a, and, outside the upright 1a, is supported by the bearing 45 embedded in the support 46, which is rendered integral with the upright 1a itself by means of the cylindrical blocks 47.

-After the said simple operation has been carried out, see figures 6, 6A and 6B, the engagement/release tension means 38 are adjusted in order to loosen the belt 3, and, more particularly, the screw 18 is removed, thus releasing the end portion 10b of the shaft 10 of the tension roller 7, and, whilst the knob 21 is being grasped, see the arrow F10, the end portion 10b itself is moved downwards, such that it slides in the vertical slot 17, for placement of the corresponding roller 7 in the second, suspended, inclined position, with consequent loosening of the belt 3. -In this context it must be remembered that the opposite end portion 10a of the shaft 10 is supported by the pendent support 5a in a manner such that it can be oriented.

-Then, by adjusting the engagement/release tension means 36, the belt 3 is loosened further, and more particularly, whilst the knob 16 is being grasped, the end portion 9b of the shaft 9 of the tension roller 7 is released from the circular chamber 14, see the arrow F9, and is then moved through the horizontal slot 15, and the corresponding roller 7 is disposed in the second, inclined position, thus obtaining further loosening of the belt 3. -In this context it must be remembered that the opposite end 9a of the shaft 9 is supported by the pendent support 5a such that it can be oriented.

-With particular reference to figures 6, 6A and 6B, after execution of the quick and simple operations previously described and illustrated, the conveyor unit 2 is in its second position, or position for extraction of the belt, in which the end side 2a is supported/embedded in the upright 1a, and the opposite or second, transverse end side 2b is detached from the wall 1b, and is freely suspended, positioned in the vicinity of the profiled aperture 22-23, and more particularly is spaced from the upper edge 22, thus defining the "S" -shaped gap.

-Again according to this configuration, in addition, the belt 3 is not tightened, i.e. it is loosened, with the tension rollers 6 and 7 disposed in their second, suspended non-tightening position, with the first ends 9a and 10a of the respective shafts 9 and 10 of the said tension rollers 6 and 7 still supported and secured to the pendent support 5a.

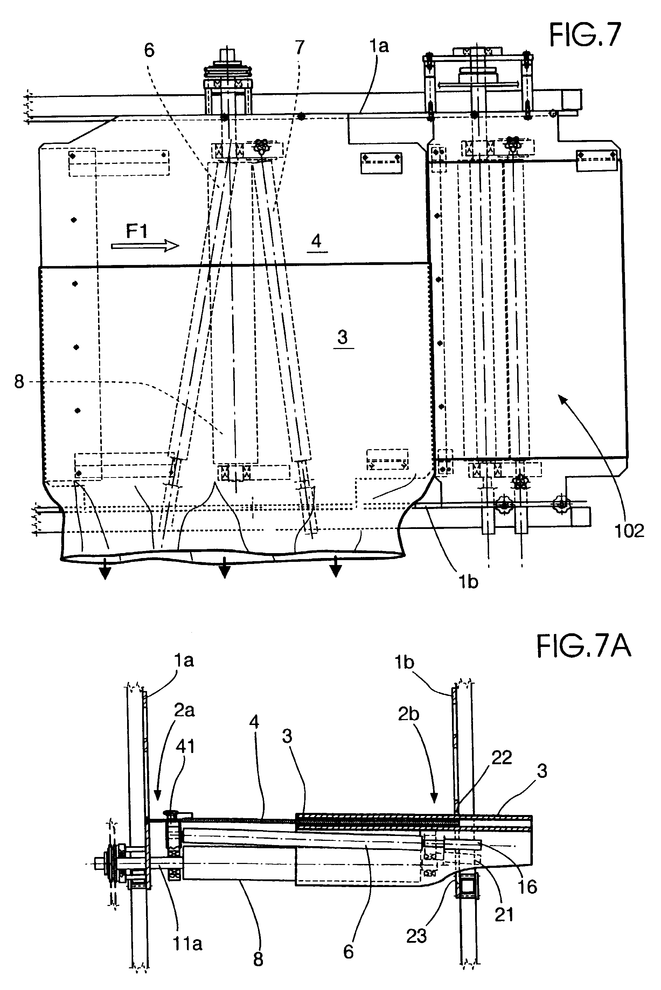

-Thus, again in this configuration, see also figures 7 and 7A, by operating through the profiled aperture 22-23, it is possible to access and operate on the end side 2b and on the corresponding conveyor unit 2, and then to grasp and remove easily the belt 3, by translating it transversely, such that the upper part of the said belt 3 is extracted by being passed through the "S" -shaped gap formed between the edge 22 and the plate 4b, and then a new belt is inserted quickly, again by being translated transversely, as previously described.

-After the new belt 3 has been inserted, by adjusting the engagement/release tension means 36, re-positioning is carried out of the end portion 9b of the shaft 9 in the circular chamber 14, by passing this portion through the slot 15, then adjusting the engagement/release tension means 38, in order to re-position the end portion 10b of the shaft 10 in the vertical slot 14, and secure it in position by means of the screw 18, in order to tighten the new belt 3.

-Subsequently, the transverse end side 2b of the conveyor unit 2 is raised upwards, until the end transverse portion 4b of the plate 4 is disposed against the edge 22, which acts as a stop for the correct level position, and then the said end portion 4b is connected to the said edge 22 by means of the screws 24, 25, and 26, thus placing the conveyor unit 2 in the above-described first position for transport of objects.

-By this means, the conveyor unit 2 with the new conveyor belt 3 is ready to re-start, without requiring new timing of the said conveyor unit 2, since the guide roller 8 and the corresponding drive 13 applied to the wheel 12 have not been removed.

-With reference to the foregoing, it is apparent that replacement of the continuous belt 3 of the conveyor unit 2 has been carried out by means of fast and simple operations, without removing the tension roller 6 the tension roller 7 the guide roller 8 the plate 4, without having to use external tooling, and without requiring highly specialised workers, and, in addition, since during these operations the synchronisation units 13 have not been disconnected, re-timing of the latter is not required, thus eliminating all the disadvantages previously described.

-With reference to the profiled aperture 22-23, see figures 4, 7 and 7A, it is apparent that this aperture need not have a vertical and longitudinal size larger than the end side 2b of the conveyor unit, since, as the belt 3 to be replaced is flexible, it can also be replaced by using an aperture of a size which is smaller than the end side 2b of the conveyor 2, such that the said belt 3 is inserted by being gathered together.

-In other words, substantially, the said profiled aperture 22-23 must be understood as an access opening which is provided by the upright 1b, and has a size such as to allow the operator to access the said second end side 2b and the conveyor unit 2 from the exterior, in order to be able to operate on the belt 3, such that the said aperture 22-23 has an amplitude and a profile which are selected in relation to the shape of the end side 2b of the conveyor unit 2.

-In addition, again in this context, it must be emphasised that the said profiled aperture 22-23 or access opening can be obtained by means of various types of technical-structural implementation, such that, for example see the conveyor unit indicated as 102 in figure 4, the said aperture is obtained by securing an end transverse portion 104b of a similar plate 104 of the conveyor unit 102 to an extension in the form of a "nose" 101b, which extends longitudinally in a projecting manner, beneath which there are disposed the longitudinal and vertical tubes of the frame of the machine, such as to form an aperture or opening which has a profile formed by the lower edge of the said "nose" 101b and by three segments 123x, 123y and 123z of the frame.

-Finally, with reference to figure 3A, it must be pointed out that during the operations of removal of the damaged belt and/or of insertion of the new belt, if required it is possible to adjust the adjustment tension means 37, in order to change the vertical position of the first end portion 10a of the shaft 10 of the tension roller 7, such as to loosen further the belt 3 to be replaced, and/or to facilitate insertion of the new belt.

-In addition, by adjusting the adjustment tension means 37 (fig. 3A) and the screw 18 (fig. 4) of the engagement/release tension means 38, after the new belt has been inserted, it is possible to balance and correct the tightness of the said new belt, in order to obtain correct tension of the latter, and thus to make it travel centrally when in use.

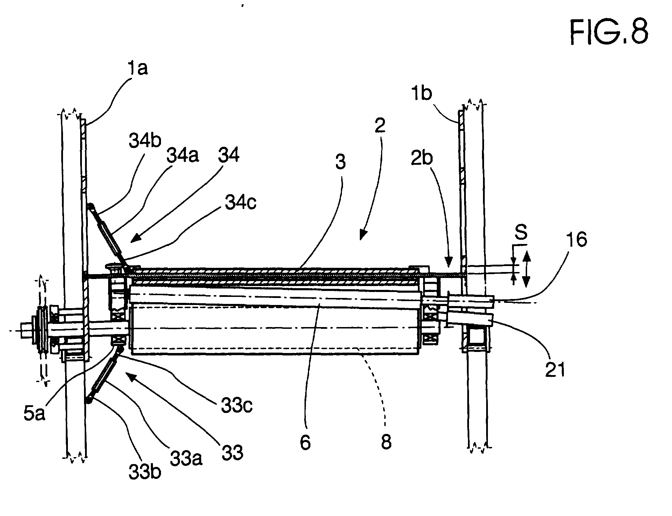

-Again with reference to the foregoing description, see figure 8, it should also be pointed out that optionally, this system can be provided with a support 33 which is adjustable axially, and for example consists of a known screw coupling, consisting of a threaded sleeve 33a and two screws 33b and 33c, which are compressed axially, and have one end which is secured to the upright 1a, and the other end which is secured against the pendent support 5a, in order to vary the angle of inclination of the conveyor unit 2, and thus the size of the gap "S", by acting on the said threaded sleeve 33a, and thus to raise or lower the end side 2b of the conveyor unit 2 itself, when the latter is in its said second position for replacement of the belt.

-Again with reference to the said description, see once more figure 8, the said system can also optionally be provided with a further brace 34 which can be adjusted axially, and which for example consists of a known screw coupling (such as that previously described), comprising a threaded sleeve 34a and two screws 34b and 34c, which brace is loaded axially with traction force, and has one end secured to the upright 1a, and the other end secured to the transverse end portion 4a of the plate 4, wherein this latter securing device is preferably disposed laterally relative to the belt 3, in order to vary the angle of inclination of the conveyor unit 2, and thus the size of the gap "S", by adjusting the said threaded sleeve 34a, and thus raising or lowering the end side 2b of the conveyor unit 2 itself, when the latter is in the said second position for replacement of the belt.

-With reference to the preceding description, the invention can also be implemented by using different engagement/release tension means, as indicated in numbers 36 and 38 in fig. 4, which are designed to be able to place the tension rollers such as to tighten or not to tighten (to loosen) the belt 3, without departing from the inventive concept which is protected in the present invention.

-Again with reference to the foregoing description, it is apparent that the invention can also be implemented by using different support devices, which are designed to balance the forces when the conveyor unit 2 is in the second position for replacement of the belt, in order to keep the second end side 2b suspended and slightly spaced "S" from the upper edge 22 of the second upright 1b, in order to permit passage of the belt 3 through the aperture formed by the edge and by the lower profile 23, without departing from the inventive concept protected in the present invention.

-The preceding description of the system and of the corresponding operative method is provided purely by way of non-limiting example, and it is thus apparent that there can be made to the latter all changes or variants which are suggested by practice and by their utilisation or use, within the scope of the following claims.

## Claims

1. System for replacement of a continuous conveyor belt of a belt conveyor unit, in a packaging machine which comprises a first and a second support upright, which extend longitudinally and vertically, and are spaced transversely, between which there is disposed the said conveyor unit which is oriented longitudinally, and includes a continuous belt which is wound in a closed path, and has an upper section which is designed to form a transport section, and a lower section which is wound around tension rollers and around a guide roller which are oriented transversely, **characterised in that** the said conveyor unit (2) has a first transverse end side (2a) which is secured to/built into the said first upright (1a) and an opposite or second transverse end side (2b) which is secured in a detachable manner to the said second upright (1b); **in that** the said conveyor unit (2) has engagement/release tension means (36; 38) which can tighten or loosen the continuous belt (3); **in that** the first transverse end side (2a) is secured to/built into the upright (1a) such that the said conveyor unit (2) can be disposed in a first position for transport of objects and in a second position for replacement of the belt, wherein, in this latter position, the second transverse end side (2b) is disconnected and detached from the second upright (1b) and suspended freely; and **in that** the second upright (1b) has an aperture (22-23) which is disposed in the vicinity of the said second transverse end side (2b) and has a size such as to allow an operator to access the said second transverse end side (2b) from the exterior and to extract or insert the belt (3) transversely when the conveyor unit (2) is in the aforementioned second position for replacement of the belt.

2. System according to claim 1, **characterised in that** the said conveyor unit (2) has a support structure (4, 5a, 5b), which on top is designed to support the conveyor belt (3), and beneath is designed to support the engagement/release tension means (36; 38) for positioning of the tension rollers (6, 7) which tighten the belt (3).

3. System according to claim 2, **characterised in that** the said support structure (4, 5a, 5b) includes engagement/release tension means (36, 14, 15; 38, 17, 18) which can support in a detachable manner at least one end portion (9b, 10b) of the shafts (9, 10) of the tension rollers (6, 7), such as to be able to dispose the latter in at least a first position for tightening of the belt (3) and in a second position for non-tightening of the belt (3).

4. System according to claim 1, **characterised in that** the said aperture (22-23) has an upper edge (22) which faces downwards, against which there is positioned and secured the said second transverse end side (2b) of the said conveyor unit (2), in order to dispose the conveyor unit (2) in the first transport position.

5. System according to any one of the preceding claims, **characterised in that** the said support structure (4, 5a, 5b) consists of a plate (4) which extends longitudinally and transversely, in which the upper surface is designed to support the belt (3), and in which the lower surface has secured to it a first pendent support (5a) and a second pendent support (5b), which are disposed respectively on the opposite sides of the tension rollers (6,7) and the guide roller (8), and are designed to support the shafts (9, 10, 11) of the said rollers (6, 7, 8); **in that** the first pendent support (5a) supports in a manner such that they can be oriented, first end portions (9a, 10a) of the shafts (9, 10) of the tension rollers (6, 7) which face the first upright (1a); and **in that** the second pendent support (5b) supports by means of the engagement/release tension means (36, 14, 15; 38, 17, 19) the opposite or second end portions (9b, 10b) of the shafts (9, 10) of the tension rollers (6, 7) which face the second upright (1b).

6. System according to claim 5, **characterised in that** the said plate (4) has a central transverse portion, on which the belt (3) slides, a first end transverse portion (4a) which extends towards the first upright (1a), and a second end transverse portion (4b), which extends towards the second upright (1b); **in that** the said end transverse portion (4a) is secured to the said first upright (1a); and **in that** the said second end transverse portion (4b) is secured in a manner such as to be detachable from the base upwards, against a edge (22) presented from the top downwards by the corresponding upright (1b).

7. System according to claim 6, **characterised in that** the detachable securing of the said transverse end portion (4b) against the said upper edge (22) is obtained by means of screws (24, 25, 26), which have their respective heads (26, 27, 28) disposed against the lower surface of the second end transverse portion (4b) of the plate (4), and their respective shanks (29, 30, 31) screwed into vertical threaded holes provided on the said upper edge (22), and into the respective second upright (1b).

8. System according to claim 5, **characterised in that** the said engagement/release tension means (36, 14, 15) consist of an insertion chamber (14) which has an access slot (15), provided in the second pendent support (5b), in order to be able to position the said second end portion (9b) of the shaft (9) of a tension roller (6) inside and outside the said circular insertion chamber (14).

9. System according to claim 5, **characterised in that** the said engagement/release tension means (38, 17, 19) consist of a vertical slot (17) which is open towards the base, provided in the second pendent support (5b), inside which it is possible to slide the said second end portion (10b) of the shaft (10) of a tension roller (7), and also consist of a vertical screw (18), the head (19) of which is disposed above and against the upper surface of the plate (4), and the shank (20) of which passes through the said plate, and is screwed inside a threaded radial hole provided in the said end portion (10b) of the shaft (10) itself.

10. System according to any one of the preceding claims, **characterised in that** in the lower section of its closed path, the belt (3) has its outer surface facing two tension rollers (6, 7), which are disposed adjacent to one another and at a first level, and its inner surface is wound around a guide roller (8) disposed at a lower level, thus defining for this lower section a configuration in the shape of an inverted "Ω".

11. System according to any one of the preceding claims, **characterised** **in that** the guide roller (8) is keyed onto a shaft (11), which has a first end portion (11a) which extends transversely inside and outside the first upright (1a), and is supported externally by an external support (46), which is integral with the upright (1a), and is supported internally by the first pendent support (5a); and **in that** the opposite, or second end (11b) of the said shaft (11) is supported by the second pendent support (5b).

12. System according to any one of the preceding claims, **characterised in that** onto the end (11t) of the said first end portion (11a), which extends beyond the upright (1a), there is keyed a driven wheel (12), which is connected to the drive and synchronisation system of the packaging machine.

13. System according to any one of the preceding claims, **characterised in that** the first pendent support (5a) supports by means of adjustment tension means (37,40,41,42,43,44) the first end portion (10a) of the shaft (10) of a tension roller (7), which faces the first upright (1a).

14. System according to claim 13, **characterised in that** the said adjustment tension means (37,40,41,42,43) consist of a vertical slot (40) which is provided in the first pendent support (5a), through which there passes the said first end portion (10a) of the shaft (10), and also consist of a vertical screw (41); **in that** the head (42) of the said screw (41) is disposed on, and against, the upper surface of the plate (4), and the shank (43) of this screw (41) passes through the said plate (4) and through a radial hole provided in the said first end portion (10a) of the shaft (10); and **in that** onto the said shank (43) there are screwed nuts (44), which are designed to adjust the vertical position of the said end portion (10a) of the shaft (10).

15. System according to any one of the preceding claims, **characterised in that** there is also provided a support (33, 33a, 33b, 33c), which is disposed beneath the pendent support (5a), and the axial size of which can be adjusted, one axial end being secured to the first upright (1a), and the other axial end being disposed against the said first pendent support (5a).

16. System according to any one of the preceding claims, **characterised** **in that** there is also provided a brace (34,34a,34b,34c), which is disposed on the plate (4), and the axial length of which can be adjusted, one axial end being secured to the first upright (1a), and the other axial end being secured to the plate (4) adjacent to the belt (3) laterally relative to the upright (1a).

17. Method for replacement of a continuous conveyor belt of a belt conveyor, in a packaging machine which comprises a first and a second support upright, which extend longitudinally and vertically, and are spaced transversely, between which there is disposed the said belt conveyor which is oriented longitudinally, and includes a continuous belt which is wound in a closed path, which has an upper section which is designed to form a transport section, and a lower section which is wound around tension rollers and around a guide roller which are oriented transversely, **characterised in** **that** the said conveyor (2) is disposed in a position for replacement of the belt, in which a first transverse end side (2a) is secured to/built into the said first upright (1a), and the opposite or second transverse end side (2b) is detached from the opposite or second upright (1b) and is suspended freely in the vicinity of an aperture (22-23) which is provided in the second upright (1b) itself; **in that** the continuous belt (3) is loosened by adjusting the engagement/release tension means (36; 38), by moving the tension rollers (6, 7) into a non-tightening position; **in that** the continuous conveyor belt (3) to be replaced is extracted transversely towards the exterior, by operating and making the belt pass through the said aperture (22-23) provided in the said second upright (1b); **in that** a new conveyor belt (3) is inserted transversely, by operating and making the belt pass through the said aperture (22-23) provided in the said second upright (1b); **in that** the new continuous belt (3) is tightened by adjusting the engagement/release tension means (36; 38), by moving the tension rollers (6,7) into a tightening position; and **in that** the second end side (2b) of the conveyor (2) is secured to the second upright (1b), and the conveyor (2) is disposed in a position for transport of objects.
